# EUROPEAN PATENT APPLICATION

(11) **EP 3 032 361 A1**
(43) Date of publication of application: **15.06.2016**
(21) Application number: 15197653.7
(22) Date of filing: 02.12.2015
(51) Int. Cl.: G04G 21/02, G06F 1/16

(54) **POWER SAVING CONTROL METHOD AND ELECTRONIC DEVICE FOR PROVIDING SAME**

(30) Priority: 09.12.2014 KR 20140176179
(71) Applicant: Samsung Electronics Co., Ltd., Gyeonggi-do 16677 (KR)
(72) Inventor: KIM, Kyungmin, 16677 Gyeonggi-do (KR); AHN, Jinhee, 16677 Gyeonggi-do (KR)
(74) Representative: Jenkins, Richard Gavin

(57) **Abstract**

A power saving control method and a wearable electronic device (100) for providing the same are provided. The power saving control method for the wearable electronic device (100) includes comparing a measurement value with a designated threshold value, and determining whether the electronic device is worn by a user, and inactivating a function for displaying information for a notification, in other words switching the electronic device (100) to low power mode, when it is determined that the electronic device is not worn by the user.

## Description

### BACKGROUND

### 1. Field of Invention

The present disclosure relates generally to a power saving control method, and more particularly, to a power saving control method which determines whether an electronic device is used and thereby controls a notification and an operation of the electronic device.

### 2. Description of the Related Art

An electronic device may be worn on a user's body to provide special functions to a user as well to provide, to the user, a basic function such as calls or a message transmission. For example, a watch type electronic device may provide a function to check user's heart rate, and may thereby help to maintain the user's health.

The electronic device may perform a function within a limited battery quantity. Accordingly, the user is inconvenienced by having to charge the battery at predetermined time intervals in order to continuously use the electronic device. However, in order to solve the above-described problem, a larger configuration of the battery may not be appropriate to increase the battery capacity in cases where the electronic device is designed to be worn on the user's body, since in these cases, the electronic device is required to be easily mounted and reduced in weight.

### SUMMARY

The present invention has been made to address at least the problems and disadvantages described above, and to provide at least the advantages described below.

Accordingly, an aspect of the present disclosure is to provide a power saving control method based on whether an electronic device is worn by a user.

Accordingly, another aspect of the present disclosure is to provide a power control method which reduces unnecessary power consumption by easily using a power saving function within a limited battery capacity of an electronic device, thereby increasing the use time of the electronic device.

Accordingly, another aspect of the present disclosure is to provide a method of determining whether an electronic device is worn or used according to a set schedule or location, and based on the determination enter a deep sleep mode, where the use of the deep sleep mode increases a use time of the electronic device, even with the limited battery capacity.

In accordance with an aspect of the present disclosure, a power saving control method for an electronic device is provided. The power saving control method includes comparing a measurement value with a designated threshold value, and determining whether the electronic device is worn by a user, and inactivating a function for displyaing information for a notification, when it is determined that the electronic device is not worn by the user.

In accordance with another aspect of the present disclosure, an electronic device is provided. The electronic device includes a sensor unit that collects state information of the electronic device, and a control unit that compares a measurement value with a designated threshold value and determines whether the electronic device is worn by a user, and inactivates a function for displaying information for a notification, when it is determined that the electronic device is not worn by the user.

### BRIEF DESCRIPTION OF THE DRAWINGS

The above and other aspects, features and advantages of the present disclosure will be more apparent from the following detailed description taken in conjunction with the accompanying drawings, in which:
FIG. 1 is a block diagram of an electronic device, according to an embodiment of the present disclosure;
FIGs. 2A and 2B illustrate an electronic device, according to an embodiment of the present disclosure;
FIG. 3 is a flowchart of a power saving control method, according to an embodiment of the present disclosure;
FIG. 4 is a flowchart of a power saving control method, according to an embodiment of the present disclosure;
FIG. 5 is a flowchart of a power saving control method, according to an embodiment of the present disclosure; and
FIGs. 6A and 6B illustrate an operation of a power saving control method in an electronic device, according to an embodiment of the present disclosure.

### DETAILED DESCRIPTION

The following description with reference to the accompanying drawings is provided to assist in a comprehensive understanding of various embodiments of the present disclosure as defined by the claims. It includes various specific details to assist in that understanding, but these are to be regarded as merely illustrative. Accordingly, those of ordinary skill in the art will recognize that various changes and modifications of the various embodiments described herein can be made without departing from the scope of the present disclosure. In addition, descriptions of well-known functions and constructions may be omitted for clarity and conciseness.

The terms and words used in the following description and claims are not limited to their dictionary meanings, but, are merely used to enable a clear and consistent understanding of the present disclosure. Accordingly, it should be apparent to those skilled in the art that the following description of various embodiments of the present disclosure is provided for illustration purposes only and not for the purpose of limiting the present disclosure as defined by the appended claims.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

As used herein, the expressions "include" or "may include" refer to the existence of a corresponding function, operation, or element, and do not limit one or more additional functions, operations, or elements. Terms such as "include" and/or "have" should be construed to denote a certain characteristic, number, operation, constituent element, element or a combination thereof, but should not be construed to exclude the existence of or a possibility of addition of one or more other characteristics, numbers, operations, constituent elements, elements, or combinations thereof.

As used herein, the expression "or" includes any or all combinations of words enumerated together. For example, the expression "A or B" may include A, may include B, or may include both A and B.

As used herein, expressions including ordinal numbers, such as "first" and "second," and the like, may modify various elements. However, such elements are not limited by the above expressions. For example, the above expressions do not limit the sequence and/or importance of the elements. The above expressions are used merely for the purpose of distinguishing an element from the other elements. For example, a first user device and a second user device indicate different user devices although both of them are user devices. For example, a first element may be referred to as a second element, and similarly, a second element may be referred to as a first element without departing from the scope of the present disclosure.

In the case where an element is referred to as being "connected" to/with or "accessed" by/from other elements, it should be understood that not only is the element directly connected to/with or accessed by/from the other elements, but also another element may exist between the two elements. Contrarily, when an element is referred to as being "directly connected" to/with or "directly accessed" by/from any other element, it should be understood that no element is interposed the two elements.

The terms used herein are only used to describe specific embodiments of the present disclosure, and are not intended to limit the present disclosure.

Unless defined otherwise, all terms used herein, including technical and scientific terms, have the same meaning as commonly understood by those of skill in the art to which the present disclosure pertains. Such terms as those defined in a generally used dictionary are to be interpreted to have meanings equivalent to the contextual meanings in the relevant field of art, and are not to be interpreted to have ideal or excessively formal meanings unless clearly defined in embodiments of the present disclosure.

An electronic device according to an embodiment of the present disclosure may be a device including a communication function. For example, the electronic device may include at least one of a smart phone, a tablet personal computer (PC), a mobile phone, a video phone, an e-book reader, a desktop PC, a laptop PC, a netbook computer, a personal digital assistant (PDA), a portable multimedia player (PMP), a moving picture experts group (MPEG-1 or MPEG-2) audio layer 3 (MP3) player, a mobile medical device, a camera, a wearable device (e.g., a head-mounted-device (HMD), such as electronic glasses, electronic clothes, an electronic bracelet, an electronic necklace, an electronic appcessory, an electronic tattoo, a smart watch, etc.).

According to embodiments of the present disclosure, the electronic device may be a smart home appliance with a finger print function. The smart home appliance may include at least one of a television (TV), a digital versatile disc (DVD) player, an audio, a refrigerator, an air conditioner, a vacuum cleaner, an oven, a microwave oven, a washing machine, an air cleaner, a set-top box, a TV box (e.g., Samsung HomeSync™, Apple TV™, or Google TV™), a game console, an electronic dictionary, an electronic key, a camcorder, and an electronic picture frame.

According to embodiments of the present disclosure, the electronic device may include at least one of various medical appliances (e.g., magnetic resonance angiography (MRA) machine, magnetic resonance imaging (MRI) machine, computed tomography (CT) machine, and an ultrasonic machine), navigation devices, global positioning system (GPS) receivers, event data recorders (EDRs), flight data recorders (FDRs), automotive infotainment devices, electronic equipment for ships (e.g., navigation equipment for ships, gyrocompasses, etc.), avionics, security devices, head units for vehicles, industrial or home robots, automatic teller machines (ATM), and point of sales (POSs) machines.

According to embodiments of the present disclosure, the electronic devices may include at least one of furniture or a part of a building/structure having a communication function, electronic boards, electronic signature receiving devices, projectors, or various measuring equipment (e.g., equipment for measuring water supply, electricity, gases, or radio waves).

The electronic device, according to an embodiment of the present disclosure, may be a combination of one or more of the aforementioned various devices. In addition, the electronic device, according to an embodiment of the present disclosure, may be a flexible device. Further, it should be obvious to those skilled in the art that the electronic device according to the present disclosure is not limited to the aforementioned devices.

Hereinafter, an electronic device, according to various embodiments of the present disclosure, will be described with reference to the accompanying drawings. The term "user" as used in the description of the various embodiments of the present disclosure may indicate a person who uses an electronic device or a device (e.g., artificial intelligence electronic device) that uses an electronic device.

An electronic device, according to various embodiments of the present disclosure, may include any number of modes. The modes include a normal mode, a sleep mode, and a deep sleep mode.

The normal mode refers to a state in which a user is using the electronic device. A user may receive information through the electronic device in the normal mode. In addition, a user may receive information about an external electronic device that is linked to the electronic device, from the electronic device through a notification. The notification may be provided with various effects such as display, sound, vibration, and the like.

The sleep mode and the deep sleep mode refer to a power saving mode in which the electronic device stops an ongoing operation and maintains a power saving state, and then rapidly restarts the operation when a specific event is generated.

In the sleep mode power input to individual components is reduced, compared to the normal mode. For example, in the sleep mode, a display unit may temporarily not be used until the generation of the specific event is recognized in order to reduce power input to the display unit. However, in the sleep mode, all notifications for calls, messages, applications, etc. recevied from an external electronic device via a communication unit may be made, or operations corresponding to the notifications may be performed.

In the deep sleep mode all notifications for calls, messages, applications, etc., or even operations corresponding to the notifications, are interrupted, compared to the sleep mode. For example, in the sleep mode, a message arrival notification may be received from the external electronic device linked to the electronic device, whereas, in the deep sleep mode, communication with the external electronic device is temporarily stopped, so that the arrival of a message at the external electronic device cannot be determined. That is, even when the message arrives at the external electronic device, the electrronic device, in which a communication connection is temporarily stopped, may inactivate a function of displaying information for a notification.

In the deep sleep mode, power flowing into one or more other components, as well as communication, may be temporarily interrupted. A configuration in which the power is interrupted may vary depending on what type of configuration in which an event for switching the deep sleep mode into the normal mode or the sleep mode is recognzied. By way of an example, when, in the deep sleep mode, a measurement value is received from a sensor unit and switching into the normal mode or the sleep mode is determined, the power supply to the remaining components, with the exception of the sensor unit, may be temporarily interrupted. By way of another example, when, in the deep sleep mode, the selection of an input unit (a power key or a reset key) is recognized and switching into the normal mode or the sleep mode is set, power flowing into the remaining components, with the exception of the input unit, may be temporarily interrupted.

An electronic device that has recognized entry into the deep sleep mode may transmit, to an external electronic device that communicates with the electronic device, a notification to inform of the entry into the deep sleep mode. The external electronic device that has received the notification may display, in a display unit, a message regarding the entry of the electronic device into the deep sleep mode , or may, alternatively, inform of the entry into the deep sleep mode through a sound, vibration, or the like.

An electronic device that has recognized a release of the deep sleep mode may transmit, to an external electronic device that communicates with the electronic device, a notification to inform of the release of the deep sleep mode. The external electronic device that has received the notification may display, in a display unit, a message regarding the release of the deep sleep mode, or may alternatively, inform of the release of the deep sleep mode through a sound, vibration, or the like.

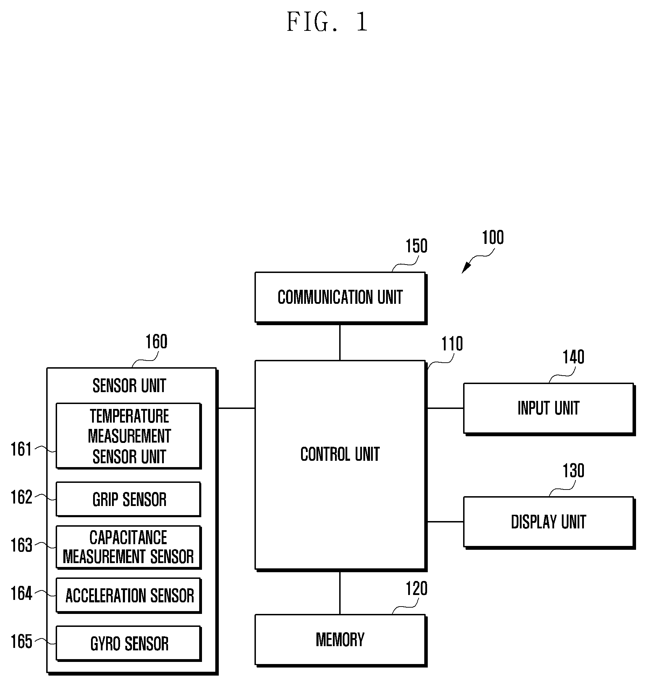

FIG. 1 is a block diagram of an electronic device, according to an embodiment of the present disclosure.

Referring to FIG. 1, an electronic device 100 is provided. The electronic device includes a control unit 110, a memory 120, a display unit 130, an input unit 140, a communication unit 150, and a sensor unit 160.

The control unit 110 controls the overall operations of the electronic device 100 and signal flows between the internal configurations of the electronic device 100, and performs a data processing function for processing data. For example, the control unit 110 may be formed of a CPU (central processing unit), an AP (application processor), etc. In addition, the control unit 110 may be formed of a single-core processor or a multi-core processor.

The control unit 110 receives a measurement value through the sensor unit 160 in order to determine whether the electronic device 100 is worn by a user. The control unit 110 determines whether the electronic device 100 is worn by the user, using the measurement value received from a temperature measurement sensor unit 161. The control unit 110 may determine whether the electronic device 100 is worn by the user, by using only the measurement value received from the temperature measurement sensor unit 161, or by additionally using a measurement value received from a grip sensor 162 or a capacitance measurement sensor 163.

The control unit 110 which has determined that the electronic device 100 is not worn by the user may inactivate a function for displaying information for a notification through at least a part of a display. That is, the control unit 110 may execute a deep sleep mode.

The control unit 110 which has determined that the electronic device 100 is not worn by the user may additionally detect the movement of the electronic device 100. The control unit 110 may receive a measurement value from an acceleration sensor 164, a gyro sensor 165, etc. to detect the movement of the electronic device 100. The control unit 110 determines whether the electronic device 100 is moved according to the received measurement value, and executes the deep sleep mode when it is determined that the electronic device 100 is not moved.

In addition, the control unit 110 determines whether the electronic device 100 is worn by the user, and then ascertains the current location of the electronic device 100 using a GPS, 3G (3^{rd} generation) or 4G (4^{th} generation), Wi-Fi, etc. of the communication unit 150, when the electronic device 100 is worn by the user. The control unit 110 determines whether the ascertained current location coincides with a preset location. The preset location is a location in which the deep sleep mode is set to be executed by the user. The preset location is stored in the memory 120. In addition, the control unit 110 may receive data regarding the preset location from an external electronic device, and store the received data. The external electronic device may be connected to the electronic device 100, and the connection may be performed through the communication unit 150. The control unit 110 may download data regarding the preset location, which has been uploaded to a server by the external electronic device, and store the downloaded data in the memory 120.

When the control unit 110 determines the current location of the electronic device 100 through the GPS, the current location and the preset location are indicated by coordinate values, and the preset location refers to a region within a predetermined (e.g., 0.5 km) radius with respect to the coordinate values.

When the control unit 110 determines the current location through 3G or 4G, the current location is obtained through information of a base station to which the electronic device 100 is connected when the electronic device 100 is positioned at the current location. The preset location set by the user may be set through information of a base station to which the electronic device 100 is connected at a point where the electronic device 100 has been previously positioned.

When the control unit 110 determines the current location through a Wi-Fi signal, the current location is obtained through signal information of a wireless router (i.e., access point) which is captured when the electronic device 100 is positioned at the current location. The preset location set by the user may be set through information of a wireless router that transmits signals recognized at the point where the electronic device 100 has been previously positioned.

The electronic device 100 may be connected to one or more external electronic devices through short-range wireless communication, such as Bluetooth (BT), near field communication (NFC), Wi-Fi direct, etc. In this case, the electronic device 100 may receive information about the current location of the electronic device 100 through at least one of the electronic device 100 and the one or more external electronic devices.

That is, when the electronic device 100 transmits and receives data to and from an external electronic device through short-range wireless communication, the control unit 110 may receive information about the location of the external electronic device from the external electronic device. The received information about the location of the external electronic device may be set as information about the current location of the electronic device 100.

The external electronic device may determine its own location through GPS, 3G, 4G, Wi-Fi, etc.

For example, the external electronic device may determine its location through 3G, and the control unit 110 of the electronic device 100 may receive information about the determined location of the external electronic device through short-range wireless communication. The control unit 110 may set the information about the location of the external electronic device as information about the current location of the electronic device 100. The control unit 110 then compares the information about the current location of the electronic device 100 and the preset location, and performs an operation according to the comparison result.

Furthermore, when the control unit 110 determines the current location of the electronic device 100 using the above-described methods and compares the current location and the preset location, if the current location and the preset location do not coincide with each other, or if the current location is outside of a set range, the control unit 110 may ascertain a current time and compare the ascertained current time and a preset time. The preset time is a time when the deep sleep mode is to be executed by a user. The preset time is stored in the memory 120. In addition, the control unit 110 may receive data regarding the preset time from the external electronic device, and store the received data in the memory 120. The control unit 110 may download the data regarding the preset time, which has been uploaded to a server by the external electronic device, and store the downloaded data in the memory 120.

The preset time may be information about a schedule of the electronic device 100. That is, a scheduler may register schedules of e-mail, or social network service (SNS) accounts, etc. in the electronic device 100.

The electronic device 100 may be connected to one or more external electronic devices through short-range wireless communication, such as BT, NFC, Wi-Fi direct, etc. In this case, the electronic device 100 may receive information about the schedule through at least one of the electronic device 100 and the one or more external electronic devices.

That is, when the electronic device 100 transmits and receives data to and from an external electronic device through short-range wireless communication, the control unit 110 may receive the information about the schedule of a connected external electronic device, which has been received from the external electronic device. The received information about the schedule of the external electronic device may be set as a preset time of the electronic device 100.

For example, a user may register a schedule such as 'meeting', 'swimming exercise', etc. The user may set whether the electronic device 100 executes the deep sleep mode when registering the schedule. For example, when a user registers a schedule of 'meeting' as being at '09:00 on July 17, 2014', the user may set that the electronic device 100 should execute the deep sleep mode at this time. In this case, the preset time includes the year, month, day, and time the schedule is registered for. In preparation for when the time corresponding to the schedule of 'meeting' is reached, the control unit 110 may continuously ascertain the current time at specific intervals. When the current time and the preset time coincide with each other, the control unit 110 executes the deep sleep mode.

As another example, a user may register the schedule of 'swimming exercise' as being at '19:00 to 21:00 on August 13, 2014'. When the current time coincides with the preset start time (19:00), the control unit 110 executes the deep sleep mode. In addition, when the current time coincides with the preset end time (21:00), the control unit 110 releases the deep sleep mode and executes the normal mode or the sleep mode.

As another example, when the electronic device 100 receives the information about the schedule from an external electronic device through short-range wireless communication, the control unit 110 may change the mode of the electronic device 100 according to the received information about the schedule. For example, in a scheduler of the external electronic device 'watching a movie 18:00 July 30, 2014' may be registered. In this case, the electronic device 100 may receive information about the schedule of 'watching a movie 18:00 July 30, 2014' from the external electronic device, and set the received information as the preset time for a mode change. In preparation for when the preset time is reached, the control unit 110 may continuously ascertain the current time at specific intervals. When the current time and the preset time coincide with each other, the control unit 110 executes the deep sleep mode.

The memory 120 includes at least one of an internal memory and an external memory.

The internal memory includes at least one of, for example, a volatile memory (e.g., DRAM (Dynamic Random Access Memory), SRAM (Static RAM), SDRAM (Synchronous Dynamic RAM), or the like), a non-volatile memory (e.g., OTPROM (One Time Programmable Read Only Memory), PROM (Programmable ROM), EPROM (Erasable and Programmable ROM), EEPROM (Electrically Erasable and Programmable ROM), mask ROM, flash ROM, or the like), an HDD (Hard Disk Drive), and an SSD (Solid State Drive).

The external memory includes at least one, for example, CF (Compact Flash), SD (Secure Digital), Micro-SD (Micro Secure Digital), Mini-SD (Mini Secure Digital), xD (eXtreme Digital), and a memory stick.

The memory 120 may store a variety of data such as a schedule, a location, etc. The memory 120 may store data received from the external electronic device that communicates with the electronic device 100. In addition, when the electronic device 100 downloads data that has been stored in a server by the external electronic device, the memory 120 may store the downloaded data.

The display unit 130 may be integrated with a display panel and a touch panel which have been combined to have a laminated structure. The display panel may be implemented as various types of display panels, such as an LCD (Liquid Crystal Display), an OLED (Organic Light-Emitting Diode) display, an AM-OLED (Active-Matrix OLED), a PDP (Plasma Display Panel), etc. The display panel may be implemented to be flexible, transparent, or wearable. The touch panel may recognize a touch input using at least one of, a capacitive method, a decompression method, an infrared method, and an ultrasonic method. The touch panel may further include a tactile layer. In this case, the touch panel may provide a tactile response to a user.

The input unit 140 may transmit commands or data input from a user to the control unit 110, the memory 120, the display unit 130, the communication unit 150, and the sensor unit 160 through a power button and a reset button. In addition, the input unit 140 may include the touch panel included in a touch screen of the display unit 130. For example, the input unit 140 may provide signals input through the touch screen of the display unit 130 to the control unit 110.

The communication unit 150 connects communication between the electronic device 100 and the external electronic device. For example, the communication unit 150 may be connected to a network through wireless communication or wired communication, and communicate with the external electronic device. The wireless communication includes, for example, Wi-Fi, BT, and NFC.

The communication unit 150 may determine the current location of the electronic device 100 through Wi-Fi. When the communication unit 150 determines the current location of the electronic device 100 through Wi-Fi, the determined current location may be obtained through location information of one or more wireless routers (i.e., access points) that have transmitted Wi-Fi signals captured by the electronic device 100.

In addition, the wireless communication may include a GPS, and the communication unit 150 may determine the current location of the electronic device 100 through the GPS. When the communication unit 150 determines the current location of the electronic device 100 through the GPS, the current location may be indicated by a coordinate value, and the preset location may refer to a region within a predetermined (e.g., 0.5 km) radius with respect to the coordinate value.

The wireless communication may include at least one of cellular communication (e.g., LTE, LTE-A, CDMA, WCDMA, UMTS, WiBro, GSM, and the like). The communication unit 150 may determine the current location of the electronic device 100 through 3G or 4G during the cellular communication. When the communication unit 150 determines the current location of the electronic device 100 through 3G or 4G, the determined current location may be obtained through information of a base station to which the electronic device 100 is connected when the electronic device 100 is positioned at the current location.

The communication unit 150 may determine the current location of the electronic device 100 through Wi-Fi, GPS, 3G, 4G, etc. and transmit the determination result to the control unit 110, so that the control unit 110 may perform an operation using the result value.

The wired communication may include at least one of, USB (Universal Serial Bus), HDMI (High Definition Multimedia Interface), RS-232 (Recommended Standard 232), and POTS (Plain Old Telephone Service). For example, when the communication unit 150 is connected to the external electronic device (e.g., a desktop) through the USB in a wired manner, information transmission and reception between the external electronic device and the electronic device 100 may be made possible through the wired communication, and a location in which the external electronic device is installed may be used as the current location information of the electronic device 100.

The sensor unit 160 may include a temperature measurement sensor unit 161, a grip sensor 162, a capacitance measurement sensor 163, an acceleration sensor 164, a gyro sensor 165, etc. The sensor unit 160 may be functionally connected to the electronic device.

The temperature measurement sensor unit 161 may be a thermistor, an RTD (Resistance Thermometer Detector), a thermocouple, an IC (Integrated Circuit) temperature sensor, etc.

The thermistor is obtained by sintering a metal oxide, and a resistance value of the thermistor may be changed depending on the temperature. The temperature is then measured through the changed resistance value.

The RTD is a sensor in which a temperature can be measured from a changed resistance value when there is a change in the temperature, in a case in which the temperature and the resistance value depending on the temperature are known.

The thermocouple measures the temperature using a phenomenon in which a closed circuit is configured by connecting two kinds of different metals or semiconductors, and an electromotive force is generated by applying a temperature difference to the junction of the both.

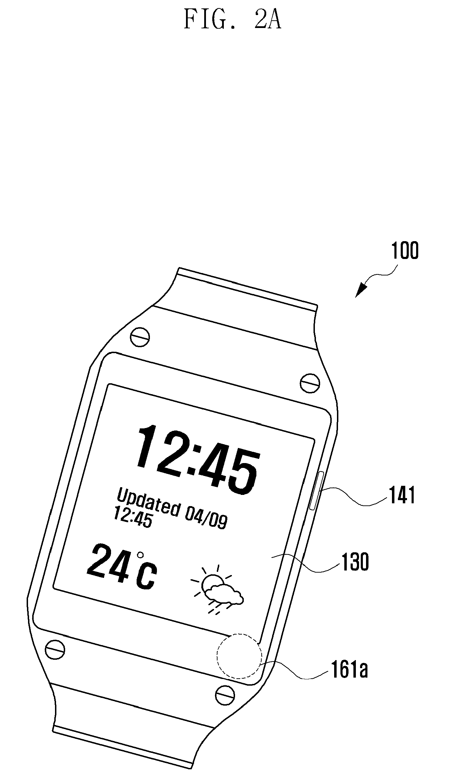

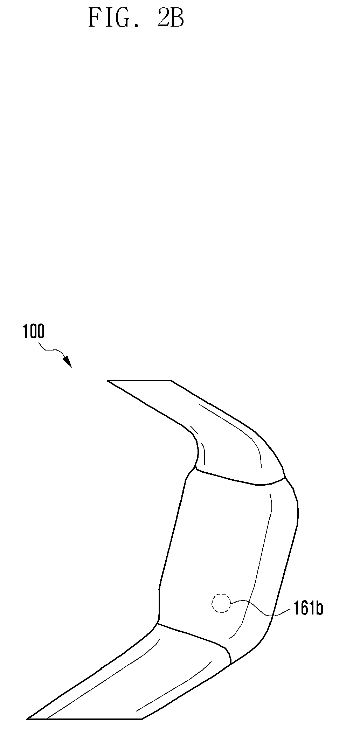

FIGs. 2A and 2B illustrate an electronic device, according to an embodiment of the present disclosure.

Referring to FIGs. 2A and 2B, the electronic device 100 is illustrated as a watch type electronic device, but is not limited thereto. Different types of electronic devices 100, particularly, wearable electronic devices may be used.

The electronic device 100 includes a display unit 130 and a power button 141 (or a reset button), and includes embedded temperature measurement sensors 161a and 161b of the temperature measurement sensor unit 161. The power button 141 (or the reset button) may be included in the input unit 140 of the electronic device 100.

FIG. 2A illustrates a front surface of the electronic device 100, and when the electronic device 100 is worn by a user, a variety of information may be determined from the display unit 130. The electronic device 100 includes the temperature measurement sensor 161a on the front surface of the electronic device 100 to measuare external temperature.

FIG. 2B illustrates a rear surface of the electronic device 100. The electronic device 100 includes the temperature measurement sensor 161b on the rear surface of the electronic device 100 to measuare a user's temperture when the electronic device 100 is worn by the user.

The control unit 110 compares the measurement values received from the temperature measurement sensor 161 a for measuring the external temperature and the temperature measurement sensor 161b for measuring the user's temperature. When a difference between the measurement value recevied from the temperature measurement sensor 161b for measuring the user's temperature and the measurement value recevied from the temperature measurement sensor 161 a for measuring the external temperature exceeds a threshold value, the control unit 110 determines that the electronic device 100 is worn by a user. When the difference between the measurement value recevied from the temperature measurement sensor 161b for measuring the user's temperature and the measurement value recevied from the temperature measurement sensor 161a for measuring the external temperature does not exceed the threshold, i.e., is small (for example, a difference of 1 to 2 degrees) or when the measurement values are the same, the control unit 110 determines that the electronic device 100 is not worn by the user.

The control unit may additionally or alternatively determine that the electronic device 100 is worn by the user, by comparing a measurement value of the user's temperature received from the temperature measurement sensor 161b with a threshold value. That is, the control unit 110 may receive a measurement value of the user's temperature from the temperature measurement sensor 161b. The control unit 110 then compares the measurement value and the threshold value. Here, the threshold value may be a preset temperature numerical value or may be a preset temperature range. The threshold value may vary depending on the type of the electronic device 100 and the location in which the electronic device 100 is worn by the user. In addition, the threshold value may vary depending on the location, time, and external temperature of the electronic device 100, weather, a state of the electronic device 100 (e.g., a movement, a button input, a detection of the command from an external device), etc. The threshold value may be set during the manufacturing process, or additionally set by a user.

The sensor unit 160 of the electronic device 100 collects state information of the electronic device 100, and the control unit 110 compares a measurement value measured by a sensor of the sensor unit 160 functionally connected to the electronic device 100 and a designated threshold value to determine whether the electronic device 100 is worn by the user. The control unit 110 then processes a function for displaying information about a notification through at least a part of a display unit 130 functionally connected to the electronic device 100 to be inactivated when it is determined that the electronic device 100 is not worn by the user.

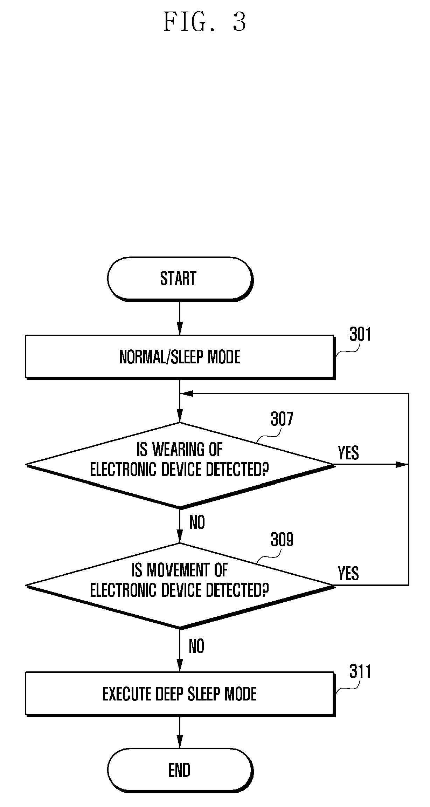

FIG. 3 is a flowchart of a power saving control method, according to an embodiment of the present disclosure.

Referring to FIG. 3, in step 301, the control unit 110 executes a normal mode or a sleep mode.

In step 307, the control unit 110 determines whether the electronic device is worn by a user. The control unit 110 returns to step 307 when it is determined that the electronic device 100 is worn by the user in step 307. The control unit 110 proceeds to step 309 when it is determined that the user is not wearing the electronic device 100 in step 307.

In step 309, the control unit 110 detects the movement of the electronic device 100. When the movement of the electronic device 100 is detected, the control unit 110 returns to step 307. When the movement of the electronic device 100 is not detected, the control unit 110 proceeds to step 311 to execute a deep sleep mode.

That is, the control unit 110 having determined that the electronic device 100 is not worn by the user inactivates the function for displaying information for a notification on the electronic device 100. Furthermore, when detecting a state change (e.g., a movement, a temperature change of the temperature measurement sensor unit 161, a key inupt, etc.) of the electronic device 100 while the deep sleep mode is executed, the control unit 110 may return to step 301 and execute the normal mode or the sleep mode.

The operation of determining whether the the electronic device is worn by the user and the operation of determining whether the electronic device is moved, which have been described, will be described in more detail.

An operation of determining, by the control unit 110, whether the electronic device 100 is worn is performed using one or more sensors of the sensor unit 160. The control unit 110 may use the temperature measurement sensor unit 161, the grip sensor 162, the capacitance measurement sensor 163, etc. of the sensor unit 160 to determine whether the electronic device 100 is worn.

The control unit 110 may determine whether the electronic device 100 is worn by receiving a sensor value through the temperature measurement sensor unit 161. The temperature measurement sensor unit 161 includes a plurality of temperature measurement sensors, and one temperature measurement sensor 161b among these may be provided on a surface of the electronic device 100, which is brought into contact with a part of the user's body, as illustrated in FIG. 2B.

The control unit 110 receives a measurement value regarding the measured user's temperature from the temperature measurement sensor unit 161. The control unit 110 compares the measurement value with a threshold value. Here, the threshold value may be a preset temperature numerical value or a preset temperature range. The threshold value may vary depending on the type of the electronic device 100 and the location in which the electronic device 100 is worn by the user. In addition, the threshold value may vary depending on the location, time, and external temperature of the electronic device 100, weather, a state of the electronic device 100, etc. The threshold value may be set during the manufacturing process, or may be set by a user.

For example, the threshold value may be set as a range of between 28 and 29 °C. When receiving a measurement value of 28 °C from the temperature measurement sensor unit 161, the control unit 110 compares the measurement value and the threshold value. Since the measurement value is within the range of the threshold value, the control unit 110 determines that the electronic device 100 is worn by the user. When receiving a measurement value of 25 °C from the temperature measurement sensor unit 161, the control unit 110 determines that the electronic device 100 is not worn by the user, because the measurement value is outside the range of the threshold value.

As another example, the control unit 110 may change the threshold value depending on the external temperature and the location in which the electronic device 100 is worn by the user. When the electronic device 100 includes a temperature measurement sensor 161a for measuring the external temperature, the external temperature may be measured through the temperature measurement sensor 161 a. The electronic device 100 may, alternatively, not include the temperature measurement sensor 161a for measuring the external temperature. In this case, the external temperature may be received from a server having a sensor for measuring the external temperature or may be received from an external electronic device connected to the electronic device 100. When the control unit 110 determines that the external temperature is -5 °C and the electronic device 100 is located outside a building, the threshold value which has been set as a range of between 28 to 29 °C may be changed to 25 to 26 °C. In this case, when the user's temperature is 25 °C based on the measurement result received through the temperature measurement sensor 161b, the control unit 110 determines that the electronic device 100 is worn by the user, because the measurement value is within the range of the threshold value.

An operation of determining, by the control unit, whether the electronic device 100 is moved is performed using one or more sensors of the sensor unit 160. The control unit may use the acceleration sensor 164 or the gyro sensor 165 of the sensor unit 160 to determine whether the electronic device 100 is moved.

The acceleration sensor 164 measures dynamic force, such as the movement, vibration, impact, or the like of the electronic device 100. The gyro sensor 165 detects the movement of the electronic device 100 to measure the location and orientation of the electronic device 100 which is rotated.

Accordingly, when it is determined that a predetermined operation is repeatedly performed through the acceleration sensor 164 or the gyro sensor 165 of the sensor unit 160, the control unit 110 determines that the electronic device 100 is moved.

The control unit 110 may change the threshold value depending on the state of the electronic device 100, such as whether the electronic device worn by the user has moved. Thus, the control unit 110 may change the threshold value to between a range of 30 to 31 °C. In this case, when the user's temperature is 30 °C based on the measurement result through the temperature measurement sensor 161b, the control unit 110 determines that the electronic device 100 is worn by the user, because the measurement value is within the range of the threshold value.

The electronic device 100 may additionally include on a surface of the electronic device 100, which is not brought into contact with a part of the user's body, the temperature measurement sensor 161 a for measuring the external temperature, as shown in FIG. 2A. When a difference between the measurement values received from the temperature measurement sensor 161a for measuring the external temperature and the temperature measurement sensor 161b for measuring the user's temperature exceeds a threshold value, the control unit 110 determines that the electronic device 100 is worn by the user. When the difference between the measurement values respectively received from the temperature measurement sensor 161a for measuring the external temperature and the temperature measurement sensor 161b for measuring the user's temperature does not exceed a threshold value, i.e., is small (for example, a difference of 1 to 2 degrees) or when the measurement values are the same, the control unit 110 determines that the electronic device 100 is not worn by the user. This is because, when the electronic device 100 is not worn by the user, the temperature measurement sensor 161b provided on the surface of the electronic device 100, which is brought into contact with the part of the user's body, in order to measure the use's temperature may also measure the external temperature.

The electronic device 100 may alternatively not include the temperature measurement sensor 161 a for measuring the external temperature. In this case, the external temperature may be received from a server having a sensor for measuring the external temperature or may be received from an external electronic device connected to the electronic device 100.

For example, when it is determined that the external temperature is 23 °C and the electronic device 100 is located outside a building, the control unit 110 may measure the user's temperature through the temperature measurement sensor 161b. When the measurement result is 23 °C, the measurement value is the same as the threshold value, and therefore the control unit 110 determines that the electronic device 100 is not worn by the user.

Whether the electronic device 100 is worn may be determined according to the temperature measurement, or may be additionally determined according to a measurement value received from the grip sensor 162 or the capacitance measurement sensor 163.

The grip sensor 162 and the capacitance measurement sensor 163 may be provided on a part or a whole of the electronic device 100, which is brought into contact with the user's body. For example, when the electronic device is provided in the form of a watch or a bracelet, the grip sensor 162 and the capacitance measurement sensor 163 may be provided on a part or a whole of the electronic device 100, which is brought into contact with the user's wrist. In addition, when the electronic device 100 is provided in the form of a glasses, the grip sensor 162 and the capacitance measurement sensor 163 may be provided on a part or a whole of the electronic device 100, which is brought into contact with the user's body such as the temple, nose, ears, or the like. In this case, the control unit 110 compares the measurement value received from each of the sensors and the threshold value and determines whether the electronic device 100 is worn.

As described above, the operation of determining whether the electronic device 100 is moved may be perfromed using sensor values measured by one or more sensors of the sensor unit 100, such as the acceleration sensor 164, the gyro sensor 165, etc.

In this case, the control unit 110 compares the measurement value received from each of the sensors and the threshold value to determine whether the electronic device 100 is moved.

Additionally, the sensor unit 160 may include an illuminance sensor. For example, when the electronic device 100 is in a bag without being worn by a user and the internal temperautre of the bag is similar to the threshold value, the control unit 110 of the electronic device 100 may determine that the electronic device 100 is worn by the user. To prevent this, the control unit 110 may receive the measurement value measured by the illuminance sensor from the illuminance sensor, and determine the presence/absence of light. When it is determined that there is no light from the illuminance sensor even when the measurement value regarding the temperature and the movement satisfies the condition that the electronic device 100 is worn, it may be determined that the electronic device 100 is in fact not worn by the user.

Additionally, the sensor unit 160 may further include a heart rate sensor. The heart rate sensor determines that the electronic device 100 is worn by the user when there is measured data, and determines that the electronic device 100 is not worn by the user when there is no measured data.

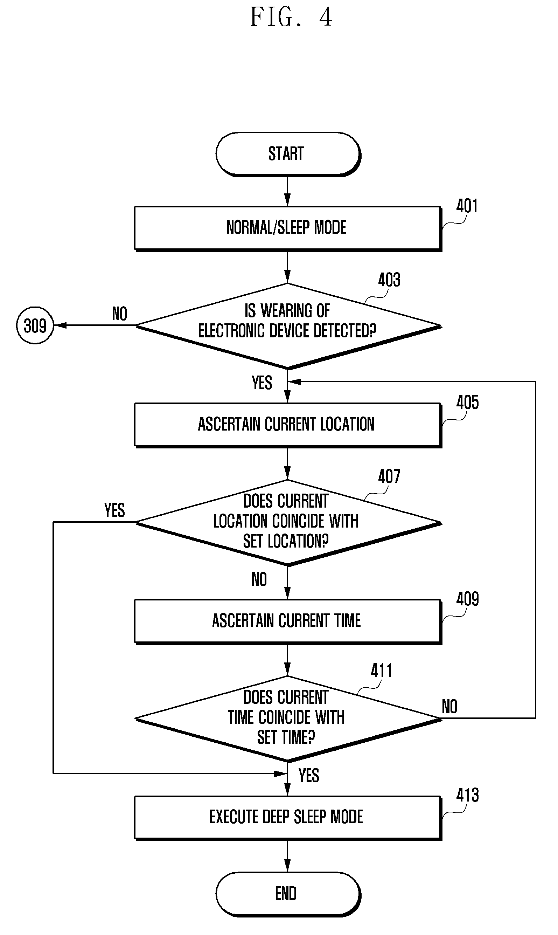

FIG. 4 is a flowchart of a power saving control method, according to an embodiment of the present disclosure.

Referring to FIG. 4, in step 401, the control unit 110 executes a normal mode or a sleep mode.

In step 403, the control unit 110 determines whether the electronic device 100 is worn by a user. When it is determined that the electronic device 100 is not worn by the user, the control unit 110 performs steps 309 to 311 of FIG. 3. When it is determined that the electronic device 100 is worn by the user, the control unit 110 proceeds to step 405.

In step 405, the control unit 110 ascertains a current location of the electronic device 100. The control unit 110 may use the GPS, Wi-Fi, 3G, or 4G of the communication unit 150 in order to ascertain the current location.

In step 407, the control unit 110 determines whether the ascertained current location coincides with a preset location. Here, the preset location is a location which is set by a user to execute a deep sleep mode. When it is determined that the current location coincides with the preset location or the current location is within a range having a predetermined distance from the preset location in step 407, the control unit 110 proceeds to step 413 and executes the deep sleep mode. When it is determined that the current location does not coincide with the preset location or the current location is outside the range having a predetermined distance from the preset location in step 407, the control unit 110 proceeds to step 409.

In step 409, the control unit 110 ascertains a current time. The control unit 110 may ascertain the current time, that is, the year, month, day, day of week, and time.

In step 411, the control unit 110 determines whether the ascertained current time coincides with a preset time. The preset time is a time which is set by the user to execute the deep sleep mode. When it is determined that the current time coincides with the preset time in step 411, the control unit 110 proceeds to step 413 to execute the deep sleep mode. When it is determined that the current time does not coincide with the preset time in step 411, the control unit 110 returns to step 405. This is because the control unit 110 can return to step 405 under the assumption that the control unit 110 determines that the electronic device 100 is worn by the user. Alternatively, when it is determined that the current time does not coincide with the preset time in step 411, the control unit 110 may return to step 403 in order to determine whether the electronic device 100 is worn by the user. Furthermore, when the movement of the electronic device 100 is detected while the deep sleep mode is executed, the control unit 110 may return to step 401 and execute the normal mode or the sleep mode.

Alternatively, when it is determined that the electronic device 100 is worn by the user, the control unit 110 may ascertain the current time first. When the current time does not coincide with the preset time, the control unit 110 may ascertain the current location next. When it is determined that the current location coincides with the preset location or is within a predetermined range, the control unit 110 executes the deep sleep mode.

Alternatively, when it is determined that the electronic device 100 is worn by the user, the control unit 110 may ascertain only the current location to determine whether to execute the deep sleep mode. In this case, when it is determined that the current location coincides with the preset location or is within the predetermined range, the control unit 110 executes the deep sleep mode.

By way of example, it may be assumed that a user goes to work while wearing the electronic device 100. The control unit 110 may ascertain the user's location at a specific period. The control unit 110 determines whether the ascertained user's location coincides with a preset location or is within a predetermined range, when the user enters a company building which is the preset location to execute the deep sleep mode. In this case, the control unit 110 determines that the user's location coincides with the preset location or is within the predetermined range. The control unit 110 the executes the deep sleep mode.

Alternatively, when it is determined that the electronic device 100 is worn by the user, the control unit 110 may ascertain only the current time to determine whether to execute the deep sleep mode. In this case, when it is determined that the current time coincides with the preset time, the control unit 110 executes the deep sleep mode.

By way of example, it may be assumed that a user goes to a movie while wearing and using the electronic device 100. The control unit 110 may ascertain the current time at a specific period. The control unit 110 determines whether a schedule previously registered in the electronic device 100 by the user or a predetermined time registered through an external electronic device that communicates with the electronic device 100 is reached. When a time for watching a movie is registered by the user, the control unit 110 determines whether the current time coincides with the registered time, that is, a preset time. When it is determined that the current time coincides with the preset time, the control unit 110 executes the deep sleep mode. When an end time is additionally registered by the user when a schedule for watching a movie is registered, the control unit 110 determines whether the current time coincides with the preset end time, and execute the sleep mode or the normal mode when the current time coincides with the preset end time.

Alternatively, when sequentially, the current location coincides with the preset location and the current time coincides with the preset time, the control unit 110 executes the deep sleep mode.

By way of example, it may be assumed that a user goes to a movie theater while wearing the electronic device 100. The control unit 110 may ascertain the current time at a specific period. The control unit 110 determines whether a schedule previously registered in the electronic device 100 by the user or a predetermined time registered through an external electronic device that communicates with the electronic device 100 is reached. When a time for watching a movie is registered by the user, the control unit 110 determines whether the current time coincides with the registered time, that is, a preset time. In a case in which the user arrives in advance to a movie start time, since the current time does not coincide with the preset time though the current location coincides with the preset location, the control unit 110 does not execute the deep sleep mode. Thereafter, when it is determined that the current time coincides with the preset time, the control unit 110 executes the deep sleep mode. When an end time is additionally registered by the user when a schedule for watching a movie is registered, the control unit 110 determines whether the current time coincides with the preset end time, and executes the sleep mode or the normal mode when the current time coincides with the preset end time.

Alternatively, when sequentially, the current time coincides with the preset time and the current location coincides with the preset location, the control unit 110 executes the deep sleep mode.

By way of example, when a time and a location for watching a movie are registered by the user, the control unit 110 determines whether the current time coincides with the regisered time, that is, a preset time. In a case in which the user is not at the location for watching a movie at a movie start time, since the current location does not coincide with the preset location though the current time coincides with the preset time, the control unit 110 does not execute the deep sleep mode.

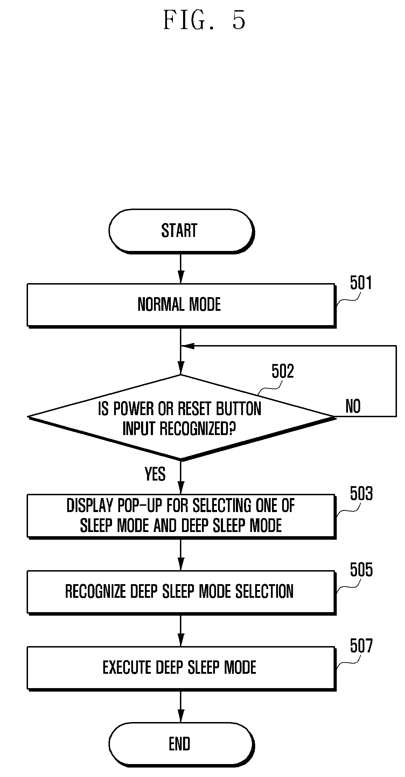

FIG. 5 is a flowchart of a power saving control method, according to an embodiment of the present disclosure.

Referring to FIG. 5, in step 501, the electronic device 100 is in the normal mode.

In step 502, the control unit 110 determines whether a power button 141 (or a reset button) is input by a user. When it is determined that the power button 141 (or the reset button) is not input in step 502, the control unit 110 maintains step 502. When it is determined that the power button 141 (or the reset button) is input in step 502, the control unit 110 proceeds to step 503.

In step 503, the control unit 110 controls the display unit 130 to display a pop-up for selecting one of the sleep mode and the deep sleep mode.

In step 505, when the control unit 110 recognizes that the deep sleep mode is selected by the user, the control unit proceeds to step 507.

In step 507, the control unit 110 executes the deep sleep mode. In addition, the electronic device 100 may execute the deep sleep mode through an indirect input through an external electronic device connected to the electronic device 100, as well as by the direct input by the user. For example, the electronic device 100 may receive a command, from the external electronic device, to change the mode of the electronic device 100 to the deep sleep mode.

Furthermore, when detecting a state change (e.g., movement, button input, detection of the command from an external device, or the like) of the electronic device 100, the control unit 110 which currently executes the deep sleep mode may return to step 501 and execute the normal mode or may execute the sleep mode.

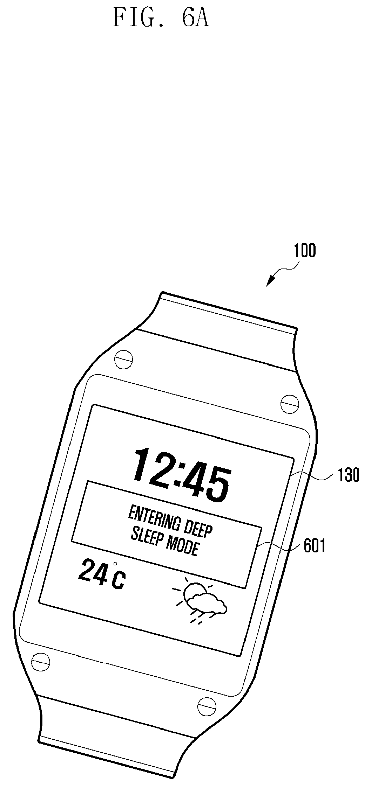

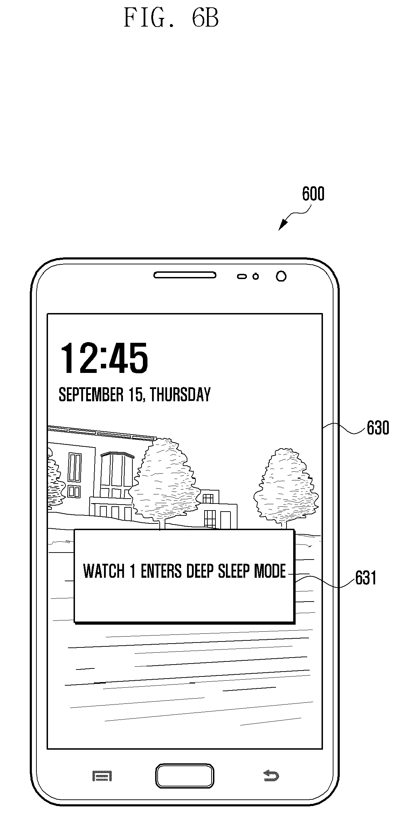

FIGs. 6A and 6B illustrate an operation of a power saving control method in an electronic device, according to an embodiment of the present disclosure.

Referring to FIG. 6A, the control unit 110 of the electronic device 100 displays, in the display unit 130, a pop-up message 601 indicating 'entering deep sleep mode' before entering the deep sleep mode.

Referring to FIG. 6B, a control unit of an external electronic device 600 connected to the electronic device 100 may regonize that the electronic device 100 enters the deep sleep mode, and display, in the display 630, a pop-up message 631 indicating 'watch 1 enters deep sleep mode'. As illustrated in FIG. 6B, the pop-up message 631 may be displayed on a lock screen. Additionally, the pop-up message 631 may be displayed on the screen even when an application is executed by a user using the external electronic device 600. The control unit of the external electronic device 600 may receive and recognize the message indicating 'entering deep sleep mode' from the electronic device 100. The 'watch 1' of the pop-up message 631 displayed on the external electronic device 600 may be a name indicating the electronic device 100. The name may be set by the user, or may be a unique name set during the manufacturing process.

Furthermore, when the deep sleep mode is released, the control unit 110 of the electronic device 100 may display a pop-up message indicating 'releasing deep sleep mode' in the display unit 130. In addition, the control unit of the external electronic device 600 connected to the electronic device 100 may recognize that the electronic device 100 releases the deep sleep mode, and display a pop-up message indicating 'watch 1 releases deep sleep mode' in the display unit 630.

When recognizing the execution of the deep sleep mode, the control unit 110 of the electronic device 100 displays a notification for notifying the execution of the deep sleep mode and transmits the notification to the external electronic device 600 connected to the electronic device 100. When the notification is transmitted, the external electronic device 600 processes to execute the deep sleep mode which blocks notifications and operation of the electornic device 100.

When recognizing the execution of the normal mode or the sleep mode during the execution of the deep sleep mode, the control unit 110 of the electronic device 100 displays a notification for notifying the execution of the normal mode or the sleep mode, and transmits the notification to the external electronic device 600 connected to the electronic device 100. When the notification is transmitted, the external electronic device 600 may process to release the deep sleep mode.

The method according to various embodiments of the present disclosure includes an opeartion of comparing a measurement value measured through one or more sensors functionally connected to the electronic device 100 with a designated threshold value and thereby determining whether the electronic device 100 is worn by a user, and an operation of inactivaing a function for displyaing information for a notification through at least a part of the display functionally connected to the electronic device 100 when it is determined that the electronic device 100 is not worn by the user.

Certain aspects of the present disclosure can also be embodied as computer readable code on a non-transitory computer readable recording medium. A non-transitory computer readable recording medium is any data storage device that can store data which can be thereafter read by a computer system. Examples of the non-transitory computer readable recording medium include a Read-Only Memory (ROM), a Random-Access Memory (RAM), Compact Disc-ROMs (CD-ROMs), magnetic tapes, floppy disks, and optical data storage devices. The non-transitory computer readable recording medium can also be distributed over network coupled computer systems so that the computer readable code is stored and executed in a distributed fashion. In addition, functional programs, code, and code segments for accomplishing the present disclosure can be easily construed by programmers skilled in the art to which the present disclosure pertains.

It is noted that the various embodiments of the present disclosure as described above typically involve the processing of input data and the generation of output data to some extent. This input data processing and output data generation may be implemented in hardware or software in combination with hardware. For example, specific electronic components may be employed in a mobile device or similar or related circuitry for implementing the functions associated with the various embodiments of the present disclosure as described above. Alternatively, one or more processors operating in accordance with stored instructions may implement the functions associated with the various embodiments of the present disclosure as described above. If such is the case, it is within the scope of the present disclosure that such instructions may be stored on one or more non-transitory processor readable mediums. Examples of the processor readable mediums include a ROM, a RAM, CD-ROMs, magnetic tapes, floppy disks, and optical data storage devices. The processor readable mediums can also be distributed over network coupled computer systems so that the instructions are stored and executed in a distributed fashion. In addition, functional computer programs, instructions, and instruction segments for accomplishing the present disclosure can be easily construed by programmers skilled in the art to which the present disclosure pertains.

The programming module according to the present disclosure may include one or more of the aforementioned components or may further include other additional components, or some of the aforementioned components may be omitted. Operations executed by a module, a programming module, or other component elements according to various embodiments of the present disclosure may be executed sequentially, in parallel, repeatedly, or in a heuristic manner. Further, some operations may be executed according to another order or may be omitted, or other operations may be added.

While the present disclosure has been shown and described with reference to certain embodiments thereof, it will be understood by those skilled in the art that various changes in form and details may be made therein without departing from the scope of the present disclosure as defined by the appended claims.

## Claims

1. A power saving control method for an electronic device, comprising:
comparing a measurement value with a designated threshold value, and determining whether the electronic device is worn by a user; and
inactivating a function for displaying information for a notification, when it is determined that the electronic device is not worn by the user.

2. The power saving control method of claim 1, further comprising:
executing a deep sleep mode that blocks an operation other than determining whether the electronic device is worn by the user, when it is determined that the electronic device is not worn by the user.

3. The power saving control method of claim 1, wherein determining whether the electronic device is worn by the user is performed based on information received from at least one of a sensor of the electronic device, an external electronic device connected to the electronic device, and an external server.

4. The power saving control method of claim 3, wherein determining whether the electronic device is worn by the user is performed according to at least one of a location, a time, an external temperature, weather, and a state of the electronic devicee.

5. The power saving control method of claim 1, wherein determining whether the electronic device is worn by the user comprises:
measuring at least one of a user's temperautre and an external temperature, and
determining whether the electronic device is worn by the user, at least partly based on a difference between the user's temperature and the designated threshold value or a difference between the user's temperature and the external temperature.

6. The power saving control method of claim 2, wherein executing the deep sleep mode further comprises:
determining whether the electronic device has been moved, when it is determined that the electronic device is not worn by the user, and
executing the deep sleep mode, when it is determined that the electronic device has not been moved.

7. The power saving control method of claim 2, further comprising:
when it is determined that the electronic device is worn by the user:
ascertaining a location of the electronic device;
determining whether the acertained location of the electronic device coincides with a preset location; and
executing the deep sleep mode, when it is determined that the acertained location of the electronic device coincides with the preset location,
wherein the preset location is a location having a predetermined range which is set to execute the deep sleep mode.

8. The power saving control method of claim 2, further comprising:
when it is determined that the electronic device is worn by the user
ascertaining a time of the electronic device;
determining whether the ascertained time of the electronic device coincides with a preset time; and
executing the deep sleep mode, when it is determined that the ascertained time of the electronic device coincides with the preset time,
wherein the preset time is a time which is set to execute the deep sleep mode, and includes a start time of a schedule or the start time of the schedule and an end time of the schedule.

9. The power saving control method of claim 8, wherein executing the deep sleep mode comprises:
ascertaining a location of the electronic device, when it is determined that the ascertained time of the electronic device coincides with the preset time,
determining whether the acertained location of the electronic device coincides with a preset location, and
executing the deep sleep mode, when it is determined that the ascertained location of the electronic device coincides with the set location.

10. The power saving control method of claim 2, further comprising:
performing at least one of ascertaining a time and determining whether the ascertained time coincides with a preset time, and ascertaining a location of the electronic device and determining whether the ascertained location of the electronic device coincides with a preset location; and
executing the deep sleep mode, when it is determined that at least one of the ascertained time and the ascertained location coincides with the preset time or the preset location, respectively, based on the performing result.

11. An electronic device comprising:
a sensor unit that collects state information of the electronic device; and
a control unit that compares a measurement value with a designated threshold value and determines whether the electronic device is worn by a user, and inactivates a function for displaying information for a notification, when it is determined that the electronic device is not worn by the user.

12. The electronic device of claim 11, wherein the sensor unit includes at least one of a temperature measurement sensor unit for detecting a user's temperature or an external temperature, a grip sensor for measuring a pressure change, a capacitance sensor for measuring a change in a capacitance, an acceleration sensor, a gyro sensor for detecting movement of the electronic device, a heart rate sensor for measuring a heart rate, and an illuminance sensor for detecting light.

13. The electronic device of claim 11, wherein the control unit executes a deep sleep mode that blocks an operation other than determining whether the electronic device is worn by the user, when it is determined that the electronic device is not worn by the user.

14. The electronic device of claim 11, wherein the threshold value is received from at least one of the sensor of the electronic device, an external electronic device connected to the electronic device, and an external server.

15. The electronic device of claim 11, wherein the sensor unit measures a user's temperature and an external temperature, and the control unit determines whether the electronic device is worn by the user based on a difference between the user's temperature and the threshold value or a difference between the user's temperature and the external temperature.

16. The electronic device of claim 13, wherein the sensor unit determines whether the electronic device has been moved when it is determined that the electronic device is not worn by the user, and the control unit executes the deep sleep mode that blocks a notification and an operation of the electronic device when it is determined that the electronic device has not been moved.

17. The electronic device of claim 13, wherein
the control unit ascertains a location of the electronic device, determines whether the ascertained location of the electronic device coincides with a preset location, when it is determined that the electronic device is worn by the user, and executes the deep sleep mode, when it is determined that the acertained location of the electronic device coincides with the preset location, wherein the preset location is a location having a predetermined range which is set to execute the deep sleep mode.

18. The electronic device of claim 13, wherein
the control unit ascertains a time, determines whether the the ascertained time coincides with a preset time, and executes the deep sleep mode, when it is determined that the ascertained time coincides with the preset time,
wherein the preset time is a time which is set to execute the deep sleep mode, and includes a start time of a schedule or the start time of the schedule and an end time of the schedule.

19. The electronic device of claim 18, wherein the control unit ascertains a location of the electronic device, determines whether the ascertained location of the electronic device coincides with a preset location, when it is determined that the ascertained time of the electronic device coincides with the preset time, and executes the deep sleep mode when it is determined that the ascertained location of the electronic device coincides with the preset location.

20. The electronic device of claim 13, wherein the control unit performs at least one of ascertaining a time and determining whether the ascertained time coincides with a preset time, and ascertaining a location of the electronic device and determining whether the ascertained location of the electronic device coincides with a preset location, and executes the deep sleep mode, when it is determined that at least one of the ascertained time and the ascertained location coincides with the preset time or the preset location, respectively, based on the performing result.
